# EUROPEAN PATENT APPLICATION

(11) **EP 4 478 595 A1**
(43) Date of publication of application: **18.12.2024**
(21) Application number: 24176156.8
(22) Date of filing: 16.05.2024
(51) Int. Cl.: H02M 1/36, H02M 3/158, H02M 1/00, H02M 3/156

(54) **CONVERTER FAULT PROTECTION**

(30) Priority: 16.06.2023 GB 202309064
(71) Applicant: Rolls-Royce plc, London N1 9FX (GB)
(72) Inventor: Gajanayake, Chandana J, Derby DE24 8BJ (GB); Molligoda, Devinda A, Derby DE24 8BJ (GB)
(74) Representative: Rolls-Royce plc

(57) **Abstract**

The disclosure relates to fault protection in a DC-DC electric power converter (900). The converter (900) comprises first, second, third and fourth switches (S1-S4) connected either side of an inductor (414). Fifth and sixth switches (SA1, SA2) are connected between respective input and output terminals (404, 406) and a common line (407), the fifth and sixth switches (SA1, SA2) providing protection in a fault event.

## Description

### TECHNICAL FIELD

The disclosure relates to fault protection for a power electronics converter.

### BACKGROUND

In aerospace, the more electric engine (MEE) and more electric aircraft (MEA) concepts are seen as increasingly attractive due to their potential to reduce fuel consumption. Such aircraft generally require a high voltage DC electrical network, operating with a DC bus voltage of for example around 270V or 540V. Power electronics converters are used to convert between the DC supply on the DC electrical network and AC supplies for electrical machines and DC supplies for battery storage. Such converters may be employed in safety critical applications, for example in starter-generators for gas turbine engines, oil pumps, fuel pumps and electrical actuation systems. Safety and reliability of such converters is therefore of critical importance. Power electronics converters may also be used in electrical or hybrid propulsion systems in land or sea applications, in which safety and reliability is also important but where weight may be less of a critical factor.

### SUMMARY

According to a first aspect there is provided a DC-DC electric power converter, comprising:
first and second input terminals for connecting to a DC voltage supply;
first and second output terminals for connecting to an electrical load;
a first capacitor having first and second terminals connected to the respective first and second input terminals;
a second capacitor having first and second terminals connected to the respective first and second output terminals;
first and second switches connected in series between the first input terminal and a common line, a first node connecting the first and second switches;
third and fourth switches connected in series between the first output terminal and the common line, a second node connecting the first and second output switches;
an inductor connected between the first and second nodes;
a fifth switch connected between the second input terminal and the common line; and
a sixth switch connected between the second output terminal and the common line.

The fifth switch may be connected between the second terminal of the first capacitor and the first switch.

The sixth switch may be connected between the second terminal of the second capacitor and the third switch.

The fifth switch may be connected between the second input terminal and the second terminal of the first capacitor.

The sixth switch may be connected between the second output terminal and the second terminal of the second capacitor.

Each switch may comprise a transistor connected in parallel with a diode. The transistor may be a MOSFET, IGBT or HFET.

The DC-DC electric power converter may further comprise a controller configured to operate each of the switches.

The DC-DC electric power converter may further comprise a first current sensor configured to measure current through the first output terminal and a second current sensor configured to measure current through the second output terminal, wherein the controller is configured to receive current readings from the first and second current sensors.

The controller may be configured to close the fifth and sixth switches if the current readings from the first and second current sensors differ by more than a predetermined difference threshold.

The controller may be configured to close the fifth and sixth switches if the current readings from the first and/or second current sensors exceed a predetermined magnitude threshold.

Where the DC-DC electric power converter is a first DC-DC electric power converter, the DC-DC electric power converter may further comprise a second DC-DC electric power converter comprising:
first and second input terminals for connecting to a second DC voltage supply;
first and second output terminals for connecting to an electrical load;
a first capacitor having first and second terminals connected to the respective first and second input terminals;
a second capacitor having first and second terminals connected to the respective first and second output terminals;
first and second switches connected in series between the first input terminal and a common line, a first node connecting the first and second switches;
third and fourth switches connected in series between the first output terminal and the common line, a second node connecting the first and second output switches; and
an inductor connected between the first and second nodes,
wherein the first output terminal of the first DC-DC electric power converter is connected to the second output terminal of the second DC-DC electric power converter.

The DC-DC electric power converter may further comprise an electrical load connected between the first output terminal of the second DC-DC electric power converter and the second output terminal of the first DC-DC electric power converter.

The DC-DC electric power converter may further comprise a seventh switch connected between the second input terminal and the common line of the second DC-DC electric power converter.

According to a second aspect there is provided a method of operating a DC-DC electric power converter comprising:
first and second input terminals connected to a DC voltage supply;
first and second output terminals connected to an electrical load;
a first capacitor having first and second terminals connected to the respective first and second input terminals;
a second capacitor having first and second terminals connected to the respective first and second output terminals;
first and second switches connected in series between the first input terminal and a common line, a first node connecting the first and second switches;
third and fourth switches connected in series between the first output terminal and the common line, a second node connecting the first and second output switches;
an inductor connected between the first and second nodes;
a fifth switch connected between the second input terminal and the common line; and
a sixth switch connected between the second output terminal and the common line,
the method comprising:
   operating the first, second, third and fourth switches to convert a first DC voltage across the DC voltage supply to a second DC voltage across the electrical load.

The method may further comprise closing the fifth and sixth switches if a current through the first output terminal differs by more than a predetermined difference threshold from a current through the second output terminal.

The method may further comprise closing the fifth and sixth switches if a current through the first and/or second output terminals exceeds a predetermined magnitude threshold.

According to a third aspect there is provided an aircraft propulsion system comprising:
an electrical machine;
a battery pack;
a DC bus;
an AC-DC converter connected between the electrical machine and the DC bus; and
a DC-DC electric power converter according to the first aspect,
wherein the first and second input terminals are connected to the battery pack and the first and second output terminals are connected to the DC bus.

The aircraft propulsion system may comprise a gas turbine engine connected to the electrical machine. In other examples the system may comprise a propulsor comprising a fan and the electrical machine, the electrical machine connected to drive the fan.

According to a fourth aspect there is provided an aircraft comprising the propulsion system of the third aspect. The aircraft may be a hybrid electric aircraft.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** shows a general arrangement of a turbofan engine for an aircraft;
**Figure 2A** is a schematic illustration of a hybrid electric aircraft propulsion system;
**Figure 2B** illustrates an electrically powered propulsor such as may be used in a hybrid electric propulsion system;
**Figure 3** is a schematic diagram of an example energy storage system (ESS) for an aircraft;
**Figure 4** is a schematic circuit diagram of an example DC-DC converter;
**Figure 5** is a schematic circuit diagram of the DC-DC converter of Figure 4 with a fault between the battery cell negative terminal and the common DC link positive terminal;
**Figure 6** is a schematic circuit diagram of the DC-DC converter of Figure 4 with a fault between the battery cell positive terminal and the common DC link negative terminal;
**Figure 7** is a schematic circuit diagram of the DC-DC converter of Figure 4 with a short circuit fault in one of the converter input side switches;
**Figure 8** is a schematic circuit diagram of the DC-DC converter of Figure 4 with a short circuit fault in one of the converter output side switches;
**Figure 9** is a schematic circuit diagram of an example DC-DC converter with integrated ground fault protection;
**Figure 10** is a schematic circuit diagram of an alternative example DC-DC converter with integrated ground fault protection; and
**Figure 11** is a schematic circuit diagram of a further alternative example DC-DC converter having two cells and integrated ground fault protection.

### DETAILED DESCRIPTION

### Figure 1

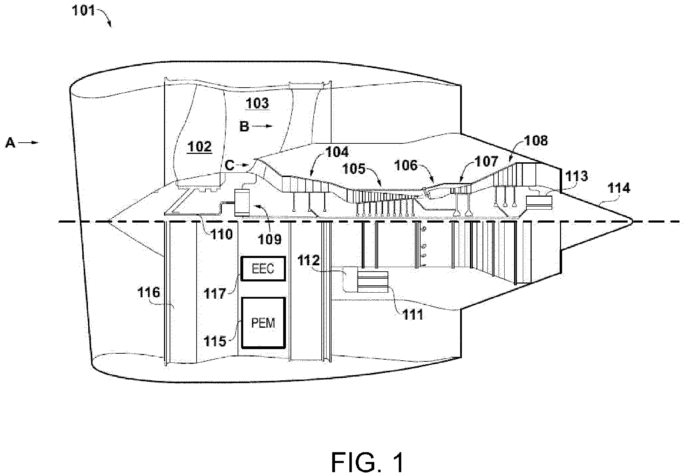

A general arrangement of an engine 101 for an aircraft is shown in Figure 1. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary-configuration epicyclic gearbox 109. Thus in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of Figure 1 comprises one or more rotary electrical machines, generally capable of operating both as a motor and as a generator. The number and arrangement of the rotary electrical machines will depend to some extent on the desired functionality. Some embodiments of the engine 101 include a single rotary electrical machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in Figure 1, comprise both a first rotary electrical machine 111 coupled with the high-pressure spool and a second rotary electrical machine 113 coupled with the low-pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in Figure 1 the first rotary electrical machine 111 is driven by the high-pressure spool by a core-mounted accessory drive 112 of conventional configuration. In alternative embodiments, the first electrical machine 111 may be mounted coaxially with the turbomachinery in the engine 101. For example, the first electrical machine 111 may be mounted axially in line with the duct between the low- and high-pressure compressors 104 and 105. In Figure 1, the second electrical machine 113 is mounted in the tail cone 114 of the engine 101 coaxially with the turbomachinery and is coupled to the low-pressure turbine 108. In alternative embodiments, the second rotary electrical machine 113 may be located axially in line with low-pressure compressor 104, which may adopt a bladed disc or bladed drum configuration to provide space for the second rotary electrical machine 113. It will of course be appreciated by those skilled in the art that any other suitable location for the first and (if present) second electrical machines may be adopted.

The first and second electrical machines 111, 113 are connected with power electronics. Extraction of power from or application of power to the electrical machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electrical machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e. both of the core gas turbine and the first and second electrical machines 111 and 113. In this way, the EEC 117 may holistically respond to both thrust demand and electrical power demand.

The one or more rotary electrical machines 111, 113 and the power electronics 115 may be configured to output to or receive electric power from one, two or more dc busses. The dc busses allow for the distribution of electrical power to other engine electrical loads and to electrical loads on the airframe.

Those skilled in the art will appreciate that the gas turbine engine 101 described above may be regarded as a 'more electric' gas turbine engine because of the increased role of the electrical machines 111, 113 compared with those of conventional gas turbines.

### Figures 2A and 2B

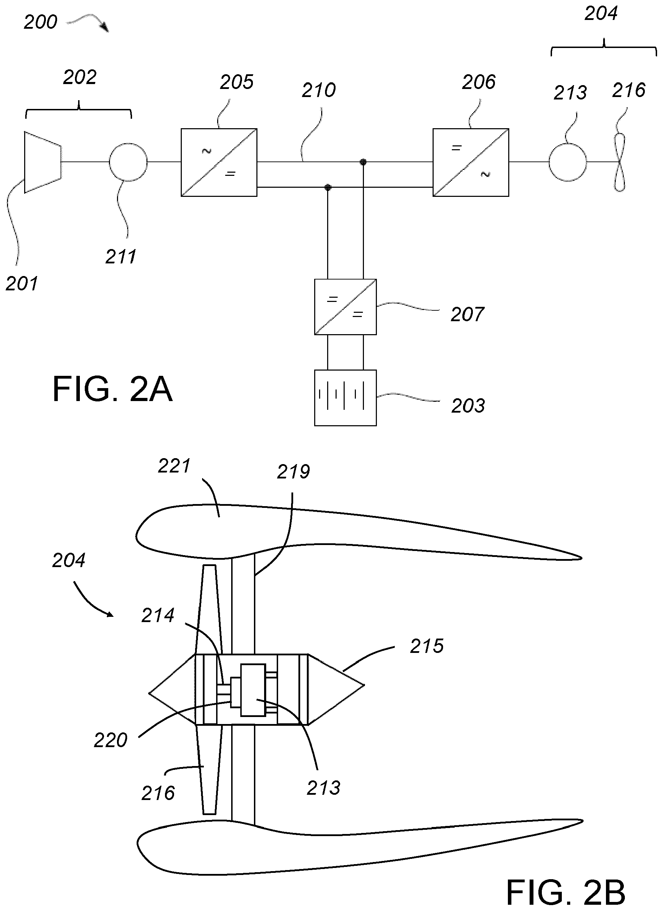

Figure 2A illustrates an exemplary propulsion system 200 of a hybrid electric aircraft. The propulsion system 200 includes a generator set 202 comprising a gas turbine engine 201 and electrical generator 211, and a battery pack 203. Both the generator set 202 and the battery pack 203 are used as energy sources to power a motor-driven propulsor 204, an example of which is shown in Figure 2B.

The illustrated propulsion system 200 further comprises an AC/DC converter 205, a dc distribution bus 210, a DC/AC converter 206 and a DC/DC converter 207. It will be appreciated that whilst one generator set 202 and one propulsor 204 are illustrated in this example, a propulsion system 200 may include more than one generator set 202 and/or one or more propulsor 204.

A shaft or spool of the engine 201 is coupled to and drives the rotation of a shaft of the generator 211 which thereby produces alternating current. The AC/DC converter 205, which faces the generator 211, converts the alternating current into direct current which is fed to various electrical systems and loads via the dc distribution bus 210. These electrical systems include non-propulsive loads (not shown in Figure 2A) and the motor-driven propulsor 204, which comprises a motor 213 which drives a propulsor 204 via the DC/AC converter 206.

The battery pack 203, which may be made up of a number of battery modules connected in series and/or parallel, is connected to the dc distribution bus 210 via the DC/DC converter 207. The DC/DC converter 207 converts between a voltage of the battery pack 203 and a voltage of the dc distribution bus 210. In this way, the battery pack 203 can replace or supplement the power provided by the generator set 202 (by discharging and thereby feeding the DC distribution bus 210) or can be charged using the power provided by the generator set 202 (by being fed by the DC distribution bus 210).

Referring to Figure 2B, in this example the propulsor 204 takes the form of a ducted fan. The fan 216 is enclosed within a fan duct 219 defined within a nacelle 221 and is mounted to a core nacelle 215. The fan 216 is driven by the electrical machine 213 via a drive shaft 214, both of which may also be thought of as components of the propulsor 204. In this embodiment a gearbox 220 is provided between the electrical machine 213 and the drive shaft 214.

The electrical machine 213 is supplied with electric power from a power source, for example the generator set 202 and/or the battery 203 via the dc bus 210. The electrical machine 213 of the propulsor, and indeed the electrical machine 211 of the generator set 202, may be of any suitable type, for example of the permanent magnet synchronous type.

Those skilled in the art will recognise the propulsion system 200 of Figures 2A-B to be of the series hybrid type. Other hybrid electric propulsion systems are of the parallel type, while still others are of the turboelectric type or have features of more than one type. The configuration of the more electric engine 101 of Figure 1 may be considered similar to a parallel hybrid system, with the main distinction being the roles of the electrical machines. For example, the electrical machines of a more electric engine are generally only used in motor mode to start the engine and to improve engine operability, whereas the electric machines of a parallel hybrid propulsion system are used to motor the spools to meaningfully add to the amount of propulsive thrust produced by the turbomachinery.

The DC/DC converter 207 of the propulsion system 200 is typically bidirectional, in that the converter 207 can be used to provide a DC voltage supply to the DC bus 210 or can convert a DC voltage supply across the DC bus 210 to charge the battery pack 203. The converter 207 may thereby be able to bridge a voltage difference between the battery pack 203 and the DC voltage bus 210 and may be able to provide a constant DC voltage to the bus 210 as the voltage across the battery pack 203 changes.

Electrical systems for aerospace applications typically use high impedance grounding systems. The battery pack 203 may not be grounded but instead allowed to float electrically with respect to the aircraft chassis. The power converters 205, 206, 207 may be centred to the chassis using a high impedance circuit comprising capacitors and resistors, such that the DC bus consists of a positive rail and a negative rail with respect to the chassis, thereby reducing insulation requirements. An advantage of such an arrangement is that a single ground fault may be tolerated. The system may not, however, be able to tolerate a second ground fault.

Electrical power systems for aerospace applications are often designed with the ability to break both positive and negative rails or with protection devices incorporated into the positive and negative rails. Fuses may also be added in the positive and negative rails. The battery impedance will vary depending on its state of charge (SoC) and operating conditions, which may result in a large operating range. This can make specifying suitable fuses more challenging under low fault current conditions due to a fault current being possibly insufficient to break a fuse if the fault has a high impedance. Contactors may not be able to break larger fault currents and may also cause failure or electrical arcing. The use of typical protection devices therefore pose design challenges and risks, particularly for high power aerospace applications.

### Figure 3

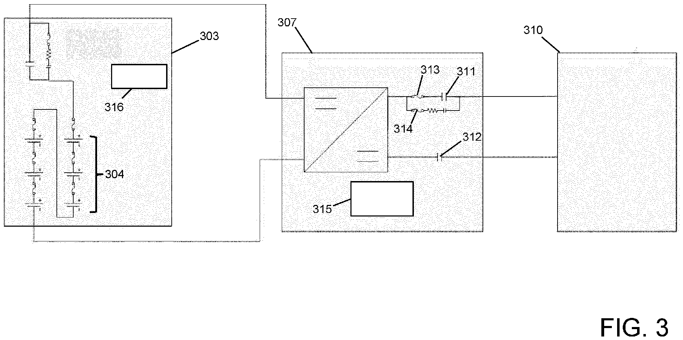

Figure 3 is a schematic diagram illustrating an example electrical storage system (ESS) 300 for the propulsion system 200 of Figure 2. The ESS 300 comprises a battery pack 303 connected to a DC/DC converter 307, which is connected to a high voltage (HV) DC distribution system 310, e.g. the DC bus 210 of the system 200 of Figure 2.

Contactors 311, 312 and fuses 313, 314 are provided in the DC/DC converter 307 to enable the converter 307 to be connected to and disconnected from the HVDC distribution system 310. A converter controller 315 controls operation of the converter 307, i.e. by controlling operation of the switching elements in the converter, described in further detail in the following examples.

The battery pack 303 comprises a battery management system 316 and a plurality of cells 304 connected in series. Further cells may be provided in parallel to those shown to increase the current capacity of the battery pack and further cells in series may be added to increase the supply voltage of the battery pack 303. Further fuses and contactors are provided in the battery pack 303 for control and safety.

### Figure 4

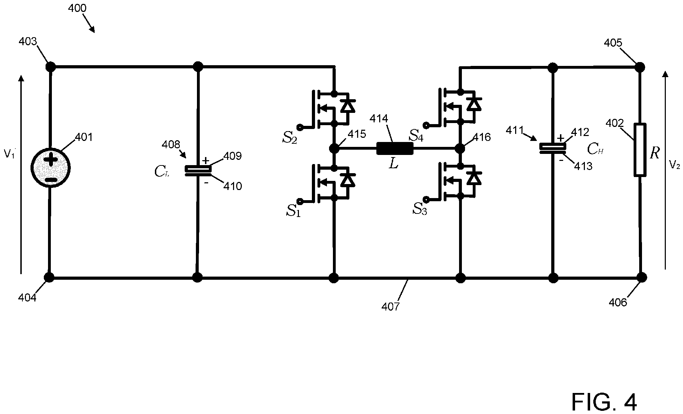

Figure 4 illustrates in schematic form a conventional DC-DC electric power converter 400 for converting a first DC voltage V₁ across a DC power supply 401 to a second DC voltage V₂ across an electrical load 402. The DC power supply 401 may for example be a battery pack of the type described above. The second DC voltage may be higher or lower than the first DC voltage, i.e. the converter 400 may be a buck or boost converter. The load 402 may represent a load provided by a DC distribution bus, as described above in relation to Figure 2A.

The converter circuit 400 comprises first and second input terminals 403, 404 connected across the DC power supply 401 and first and second output terminals 405, 406 connected across the load 402. The second input and output terminals 404, 406 are connected to a common line 407. The common line 407 may be ground or may be floating.

A first capacitor C_{L} 408 has first (positive) and second (negative) terminals 409, 410 connected to the respective first and second input terminals 403, 404. A second capacitor C_{H} 411 has first (positive) and second (negative) terminals 412, 413 connected to the respective first and second output terminals 405, 406.

First and second switches S1, S2 are connected in series between the first input terminal 403 and the common line 407. Third and fourth switches S3, S4 are connected in series between the first output terminal 405 and the common line 407. The common line 407 connects the first switch S1 and the third switch S3. An inductor L 414 is connected between a first node 415 connecting the first and second input switches S1, S2 and a second node 416 connecting the third and fourth output switches S3, S4.

Each of the switches S1-S4 comprises a MOSFET connected in parallel with a diode, the diode being reverse biased relative to the MOSFET. Each switch is operated by applying a switching voltage to a gate terminal of the MOSFET to turn the switch on. In alternative arrangements, the MOSFET in each switch may be replaced with an IGBT or HEMT (or HFET), which may be based on GaN.

By suitable control of the switching operation of the switches S1-S4, the converter 400 is capable of bidirectional power transfer, i.e. can transfer power from the supply 401 to the load 402 and also from the load 402 to the supply 401. The converter 400 can be operated to block input short circuits and output short circuit fault currents. The converter 400 is, however, vulnerable to certain faults or switch failures that, as discussed below, could be critical particularly for aircraft applications.

### Figures 5 & 6

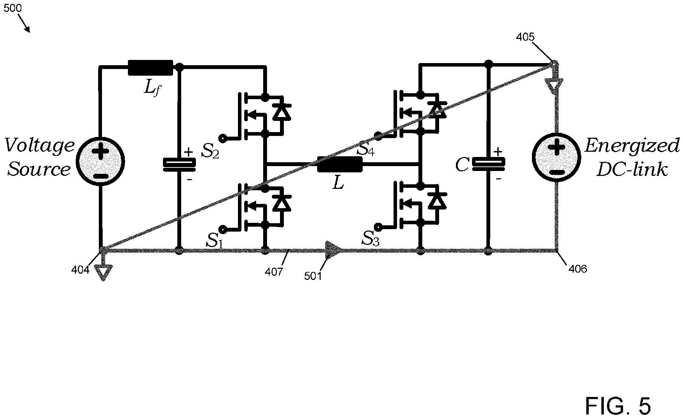

Figure 5 illustrates an example converter 500 of the type described above in relation to Figure 4, in which a short circuit fault has occurred that connects the second input terminal 404 and the first output terminal 405. This causes a short circuit current 501 to flow through the common line 407 from the second input terminal 404 to the second output terminal 406.

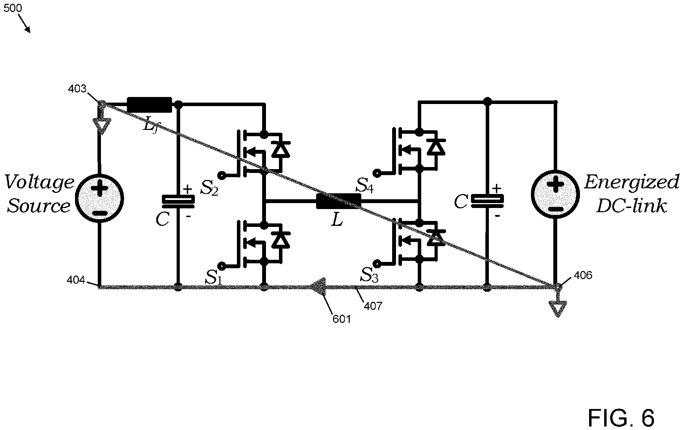

Figure 6 illustrates the example converter 500 in which a short circuit fault has occurred that connects the first input terminal 403 to the second output terminal 406. This causes a short circuit current 601 to flow through the common line 407 from the second output terminal 406 to the second input terminal 404.

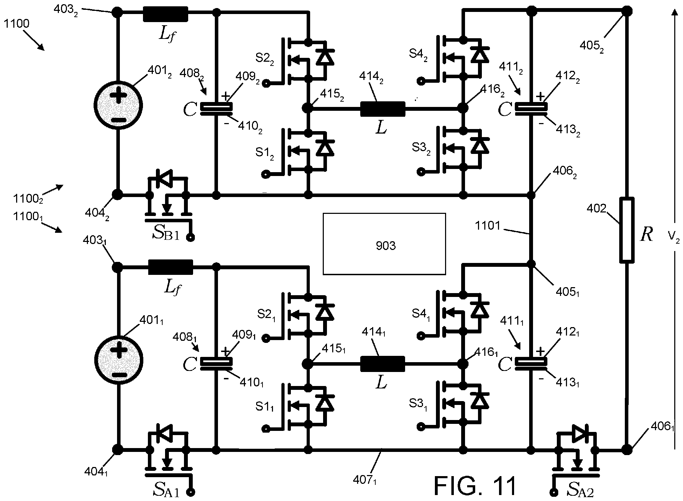

In Figures 5 to 8, and also in Figure 11, an inductor Lf is shown representing an inductance of a cable connecting the first input terminal 403 and the first terminal 409 of the first capacitor 408. The inductor Lf does not form an essential part of the converter topology.

### Figures 7 & 8

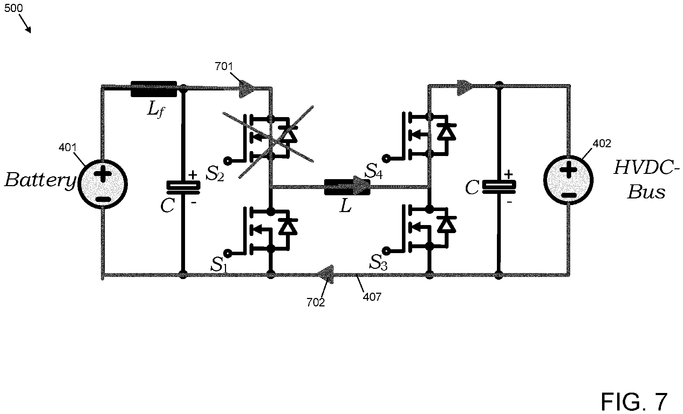

Figure 7 illustrates the example converter 500 in which a short circuit fault in the second switch S2 causes current 701 to flow from the battery 401 to the electrical load 402, with a return current 702 flowing back to the battery 401 through the common line 407.

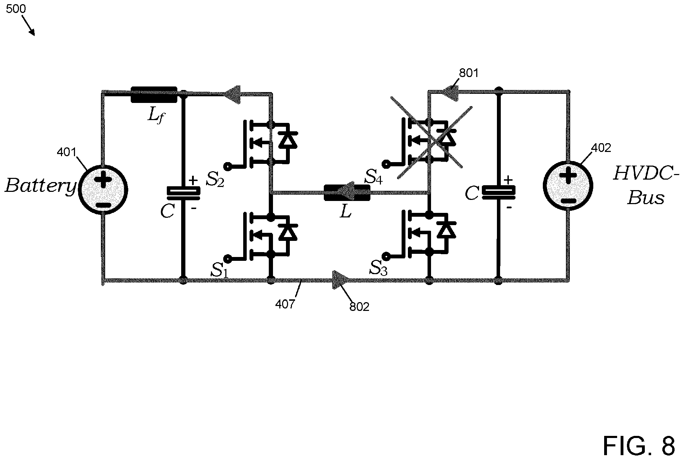

Figure 8 illustrates the example converter 500 in which a short circuit fault in the fourth switch S4 causes current 801 to flow from the load 402 to the battery 401 when the voltage across the load 402 is higher than the battery voltage, with a return current 802 flowing back to the load 402 through the common line 407.

### Figure 9

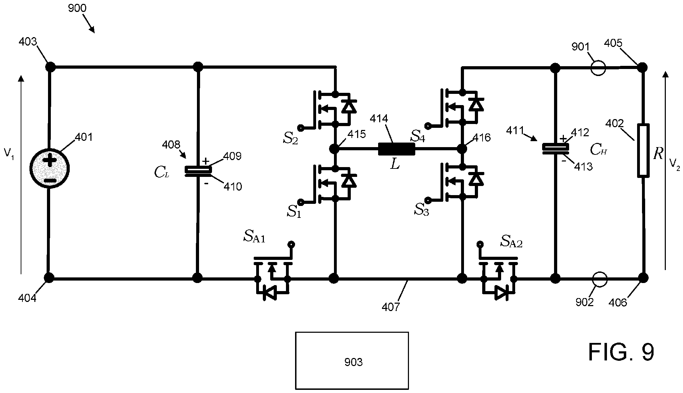

In each of the fault conditions illustrated in Figures 5, 6, 7 and 8, a fault current flows along the common line 407. The converter 900 illustrated in Figure 9 addresses this problem by including fifth and sixth switches SA1, SA2 in the common line 407. The other components of the converter 900 are as described above in relation to Figure 4. The fifth switch SA1 is connected between the second input terminal and the common line 407. The sixth switch SA2 is connected between the second output terminal 406 and the common line 407. In this example, the fifth switch SA1 is connected between the first switch S1 and the second terminal 410 of the first capacitor 408, while the sixth switch SA2 is connected between the third switch S3 and the second terminal 413 of the second capacitor 411.

### Figure 10

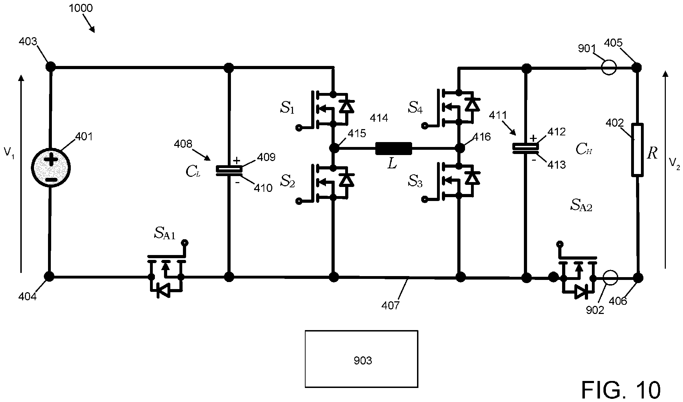

Figure 10 illustrates an alternative DC-DC converter 1000 similar to the converter 900 of Figure 9 but with the fifth switch SA1 instead connected between the second input terminal 404 and the second terminal 410 of the first capacitor 408 and with the sixth switch SA2 connected between the second output terminal 406 and the second terminal 413 of the second capacitor 411. An advantage of this arrangement is that the fifth switch SA1 is not in the boosting current path when the inductor 414 is momentarily connected with the source. The peak current through the fifth switch SA1 will therefore be lower. For the sixth switch in the position shown in Figure 10 the second capacitor 411 can be isolated from the load 402, which is not possible in the Figure 9 converter. In other alternatives, the fifth switch SA1 may be in the position shown in Figure 9 while the sixth switch SA2 is in the position shown in Figure 10 and vice versa.

In both converters 900, 1000, the fifth and sixth switches SA1, SA2 are strategically placed in the converter topology to provide an additional protection capability. The main purpose of the switches SA1, SA2 is to allow the converter to be able to protect against ground fault conditions, as illustrated in Figures 5 and 6.

Before starting operation of converter 900, 1000, switches SA1 and SA2 may be turned ON. During startup of the converter, the fifth switch SA1 may not be required to be turned ON but doing so will improve the efficiency as current will be shared with the antiparallel diode and MOSFET. However, the sixth switch SA2 does need to be turned ON before starting the converter. The fifth and sixth switches SA1, SA2 do not participate in PWM switching operation while the converter is operating but operate only for protection. As the switches SA1, SA2 are in the ON state during converter operation, power losses will be smaller because the diodes and MOSFETs share the current and reduce power losses.

Addition of the fifth and sixth switches SA1, SA2 also provides for improved fault tolerance in the converter in providing protection in the event of a single switch fault. If, for example, the fourth switch S4 has a short circuit failure (shown in Figure 8), operation of the fifth switch SA1 can be used to prevent the battery connecting directly to the DC distribution system. Similarly, if the second switch S2 is short circuit (shown in Figure 7), the converter is at similar risk when having a higher battery voltage than the distribution bus where the fourth switch S4 is not able to block the battery current flowing into the DC bus under failure of S2. In such conditions, the sixth switch SA2 can be operated to protect the converter.

### Ground Fault Detection

To detect a ground fault, current sensors 901, 902 may be provided on the positive and negative sides of the converter 900, 1000, as shown in Figures 9 and 10. A controller 903 receives current readings from the current sensors 901, 902 and determines if a fault has occurred by detecting a difference between the current readings. If the difference is greater than a predetermined difference threshold, the controller may close all switches, including the fifth and sixth switches SA1, SA2, to protect the converter 900, 1000 from fault currents.

### Switch Fault Detection

Failure of either of the second or fourth switches S2, S4 may result in the DC power supply 401 being connected to the load 402, causing a rise in current above a predetermined magnitude threshold. This may be detected by either or both of the current sensors 901, 901, causing the controller 903 to turn the fifth and sixth switches SA1, SA2 off to protect the converter 900, 1000.

### Figure 11

Figure 11 depicts a two-cell buck boost converter 1100 with integrated protection, which is an extension of the single cell buck boost converter 1000 shown in Figure 10. When two cells are utilized, lower voltage rated switches, which may have better performance at a lower cost, can be used to realize the converter 1100. The converter 1100 comprises first and second converters, each of which are as described above in relation to Figure 10. The reference signs for the various components in the converters are assigned accordingly, i.e. the DC voltage supply 401₁ is connected to the first and second input terminals 403₁, 404₁ of the first converter 1100₁ and the DC voltage supply 401₂ is connected to the first and second input terminals 403₂, 404₁ of the second converter 1100₂. The first and second DC voltage supplies 401₁, 401₂ may be the same supply or may be different supplies.

In the two-cell converter 1100 of Figure 11, the second terminal 406₂ of the second converter 1100₂ is connected to the first terminal 405₁ of the first converter 1100₁. The output voltage supply V₂ across the electrical load 402 is therefore the combined outputs of the first and second converters 1100₁, 1100₂.

In alternative examples, the switch SB1 may be omitted. This also provides ground fault capability but may result in a transient current in the event where the energised dc-link positive terminal has a ground fault with the top battery cell negative terminal. The presence of a capacitor 411₁, 411₂ from the centre point 1101 to the positive and negative rails of the converter 1100, corresponding to the first output terminal 405₂ of the second converter 1100₂ and the second output terminal 406₁ of the first converter 1100₁, allows the switch SB1 to be removed without affecting the fault protection capability.

As with the other examples described above, a controller 903 provides switching signals to each of the switches of the converter 1100 and controls operation of the additional fault switches dependent on current measurements during operation.

## Claims

1. A DC-DC electric power converter (900), comprising:
first and second input terminals (403, 404) for connecting to a DC voltage supply (401);
first and second output terminals (405, 406) for connecting to an electrical load (402);
a first capacitor (408) having first and second terminals (409, 410) connected to the respective first and second input terminals (403, 404);
a second capacitor (411) having first and second terminals (412, 413) connected to the respective first and second output terminals (405, 406);
first and second switches (S1, S2) connected in series between the first input terminal (403) and a common line (407), a first node (415) connecting the first and second switches (S1, S2);
third and fourth switches (S3, S4) connected in series between the first output terminal (405) and the common line (407), a second node (416) connecting the first and second output switches (S3, S4);
an inductor (414) connected between the first and second nodes (415, 416);
a fifth switch (SA1) connected between the second input terminal (404) and the common line (407); and
a sixth switch (SA2) connected between the second output terminal (406) and the common line (407).

2. The DC-DC electric power converter (900) of claim 1, wherein the fifth switch (SA1) is connected between the second terminal (410) of the first capacitor (408) and the first switch (S1).

3. The DC-DC electric power converter (900) of claim 1 or claim 2, wherein the sixth switch (SA2) is connected between the second terminal (413) of the second capacitor (411) and the third switch (S3).

4. The DC-DC electric power converter (1000) of claim 1, wherein the fifth switch (SA1) is connected between the second input terminal (404) and the second terminal (410) of the first capacitor (408).

5. The DC-DC electric power converter (1000) of claim 1 or claim 4, wherein the sixth switch (SA2) is connected between the second output terminal (406) and the second terminal (413) of the second capacitor (411).

6. The DC-DC electric power converter (1000) of any preceding claim, wherein each switch (S1-S4, SA1, SA2) comprises a transistor connected in parallel with a diode.

7. The DC-DC electric power converter (1000) of claim 6, wherein the transistor is a MOSFET, IGBT or HFET.

8. The DC-DC electric power converter (1000) of any preceding claim, comprising a controller (903) configured to operate each of the switches (S1-S4, SA1, SA2).

9. The DC-DC electric power converter (1000) of claim 8, comprising a first current sensor (901) configured to measure current through the first output terminal (405) and a second current sensor (902) configured to measure current through the second output terminal (406), wherein the controller (903) is configured to receive current readings from the first and second current sensors (901, 902).

10. The DC-DC electric power converter (1000) of claim 9, wherein the controller (903) is configured to close the fifth and sixth switches if the current readings from the first and second current sensors differ by more than a predetermined difference threshold.

11. The DC-DC electric power converter (1000) of claim 9 or claim 10, wherein the controller (903) is configured to close the fifth and sixth switches if the current readings from the first and/or second current sensors exceed a predetermined magnitude threshold.

12. The DC-DC electric power converter (1100) of any one of claims 1 to 11, wherein the DC-DC electric power converter is a first DC-DC electric power converter (1100₁), the DC-DC electric power converter (1100) comprising a second DC-DC electric power converter (1100₂) comprising:
first and second input terminals (403₂, 404₂) for connecting to a second DC voltage supply (401₂);
first and second output terminals (405₂, 406₂) for connecting to an electrical load (402);
a first capacitor (408₂) having first and second terminals (409₂, 410₂) connected to the respective first and second input terminals (403₂, 404₂);
a second capacitor (411₂) having first and second terminals (412₂, 413₂) connected to the respective first and second output terminals (405₂, 406₂);
first and second switches (S1₂, S2₂) connected in series between the first input terminal (403₂) and a common line (407₂), a first node (415₂) connecting the first and second switches (S1₂, S2₂);
third and fourth switches (S3₂, S4₂) connected in series between the first output terminal (405₂) and the common line (407₂), a second node (416₂) connecting the first and second output switches (S3₂, S4₂); and
an inductor (414₂) connected between the first and second nodes (415₂, 416₂),
wherein the first output terminal (405₁) of the first DC-DC electric power converter (1100₁) is connected to the second output terminal (406₂) of the second DC-DC electric power converter (1100₂).

13. A method of operating a DC-DC electric power converter (900), comprising:
first and second input terminals (403, 404) connected to a DC voltage supply (401);
first and second output terminals (405, 406) connected to an electrical load (402);
a first capacitor (408) having first and second terminals (409, 410) connected to the respective first and second input terminals (403, 404);
a second capacitor (411) having first and second terminals (412, 413) connected to the respective first and second output terminals (405, 406);
first and second switches (S1, S2) connected in series between the first input terminal (403) and a common line (407), a first node (415) connecting the first and second switches (S1, S2);
third and fourth switches (S3, S4) connected in series between the first output terminal (405) and the common line (407), a second node (416) connecting the first and second output switches (S3, S4);
an inductor (414) connected between the first and second nodes (415, 416);
a fifth switch (SA1) connected between the second input terminal (404) and the common line (407); and
a sixth switch (SA2) connected between the second output terminal (406) and the common line (407),
the method comprising:
operating the first, second, third and fourth switches (S1, S2, S3, S4) to convert a first DC voltage across the DC voltage supply (401) to a second DC voltage across the electrical load (402).

14. The method of claim 13, comprising closing the fifth and sixth switches (SA1, SA2) if a current through the first output terminal (405) differs by more than a predetermined difference threshold from a current through the second output terminal (406).

15. The method of claim 13, comprising closing the fifth and sixth switches (SA1, SA2) if a current through the first and/or second output terminals (405, 406) exceeds a predetermined magnitude threshold.
